# EUROPEAN PATENT APPLICATION

(11) **EP 4 694 304 A1**
(43) Date of publication of application: **11.02.2026**
(21) Application number: 24795939.8
(22) Date of filing: 18.04.2024
(51) Int. Cl.: H04W 24/10

(54) **INTENTION MONITORING METHOD AND MONITORING APPARATUS**

(30) Priority: 27.04.2023 CN 202310481678
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: MERH-IP Matias Erny Reichl Hoffmann Patentanwälte PartG mbB
(86) International application number: PCT/CN2024/088528
(87) International publication number: WO 2024/222558

(57) **Abstract**

This application provides an intent monitoring method and monitoring apparatus. In the intent monitoring method provided in this application, an intent management device reports information about an intent evaluation and monitoring capability supported by the intent management device to an intent requirement device. The intent requirement device determines, based on an operation and maintenance requirement and the information about the capability, an evaluation requirement and a monitoring requirement in a delivered intent, and accurately subscribes to corresponding intent report content, to ensure operation and maintenance efficiency of an autonomous network.

## Description

This application claims priority to Chinese Patent Application No. 202310481678.5, filed with the China National Intellectual Property Administration on April 27, 2023 and entitled "INTENT MONITORING METHOD AND MONITORING APPARATUS", which is incorporated herein by reference in its entirety.

### TECHNICAL FIELD

This application relates to the field of communication technologies, and in particular, to an intent monitoring method and monitoring apparatus.

### BACKGROUND

To implement evolution of a communication network from an automated network to an autonomous network, an intent-driven network emerges. The intent-driven network may be understood as a network having an intent processing capability.

An autonomous manner of the intent-driven network is as follows: obtaining an intent of an intent initiator; converting the intent into a target to be fulfilled by a system and a related constraint and condition and then transferring the target and the related constraint and condition to the system; completing intent-related data collection and preprocessing (for example, data cleaning and statistics collection) by monitoring the system; performing intent-related data analysis (for example, trend prediction, network status analysis, fault locating, and a solution suggestion); conducting network operation decision-making (for example, adjusting a parameter); guiding the system to execute the policy; and feeding back an intent fulfilment status to the intent initiator periodically or in an event-triggering manner. The intent is generally understandable to humans and can also be translated for machines without ambiguity. The intent is dedicated to describing what target needs to be fulfilled instead of how to fulfill the target. The intent is decoupled from an underlying system and a device, in other words, the intent can be flexibly ported between different systems and devices.

However, the intent-driven network has the following problem: Content fed back by an intent report is inaccurate. This is not conducive to network autonomy, and causes a decrease in network operation and maintenance efficiency.

### SUMMARY

This application provides an intent monitoring method and monitoring apparatus, to accurately obtain, in real time, an intent report required by an operator management system, and ensure operation and maintenance efficiency of an autonomous network.

According to a first aspect, this application provides an intent monitoring method, applied to an intent management device. The method includes: sending first information to an intent requirement device, where the first information indicates an intent monitoring capability of the intent management device, and the first information includes at least one of the following information: intent type information, intent object type information, intent target type information, intent feedback type information, and periodicity information; receiving second information from the intent requirement device, where the second information indicates evaluation and monitoring requirements of an intent of the intent requirement device; performing evaluation and monitoring on the intent of the intent requirement device based on the second information to obtain an intent report; and sending the intent report to the intent requirement device.

In this method, the intent management device actively reports an intent evaluation and monitoring capability of the intent management device, to provide reference for the intent requirement device to deliver an intent and propose an evaluation requirement and a monitoring requirement, and implements accurate evaluation and monitoring on the intent based on the evaluation requirement and the monitoring requirement of the intent requirement device, to obtain a corresponding intent report.

Optionally, the intent type information includes at least one of the following information: a business intent, a service intent, and a network intent.

The intent object type information includes at least one of the following information: a wireless network, a wireless service, a core network, and a core network service.

The intent target type information includes at least one of the following information: a coverage target, a throughput target, a capacity target, an energy saving target, a voice target, a service target, and a quality of experience target.

The intent feedback type information includes at least one of the following information: intent fulfilment information, intent target measurement information, and intent conflict information.

In some implementations, the intent fulfilment information includes at least one of the following subtype information: intent fulfilment status information, intent non-fulfilment reason information, intent fulfilment degree information, and intent modification suggestion information; the intent target measurement information includes at least one of the following subtype information: a current measurement value of an intent target, a predicted value of the intent target, and a measurement value of a key performance indicator associated with the intent target; and the intent conflict information includes at least one of the following subtype information: conflict type information and conflict resolution suggestion information.

The foregoing intent management device supports evaluation and monitoring of various pieces of specific information, to enable the intent requirement device to obtain information about the intent evaluation and monitoring capability of the intent management device, so that the intent requirement device can accurately learn of intent report information that can be generated by the intent management device.

Optionally, before sending the first information to the intent requirement device, the method further includes:
receiving first request information from the intent requirement device, where the first request information is used to request to query or subscribe to information that is supported by the intent management device for evaluation and monitoring.

Optionally, before sending the intent report to the intent requirement device, the method further includes:
receiving third information from the intent requirement device, where the third information indicates the intent requirement device to subscribe to or query the intent report from the intent management device, and information that is evaluated and monitored in the intent report is specified by the second information.

A specific intent report is subscribed to or queried through indication, so that the intent management device can be prevented from performing simulation on other information supported for evaluation and monitoring, to reduce a waste of computing resources, and effectively improve real-time performance of obtaining the intent report by the intent requirement device.

According to a second aspect, this application provides an intent monitoring method, applied to an intent requirement device. The method includes: receiving first information from an intent management device, where the first information indicates an intent monitoring capability of the intent management device, and the first information includes at least one of the following information: intent type information, intent object type information, intent target type information, intent feedback type information, and periodicity information; determining evaluation and monitoring requirements of an intent of the intent requirement device based on the first information; sending second information to the intent management device, where the second information indicates the evaluation and monitoring requirements of the intent of the intent requirement device; and receiving an intent report from the intent management device.

In some implementations, information that is supported by the intent management device for evaluation and monitoring based on an intent evaluation and monitoring capability includes at least one of the following information: the intent type information, the intent object type information, the intent target type information, the intent feedback type information, and the periodicity information.

Optionally, the intent type information includes at least one of the following information: a business intent, a service intent, and a network intent.

The intent object type information includes at least one of the following information: a wireless network, a wireless service, a core network, and a core network service.

The intent target type information includes at least one of the following information: a coverage target, a throughput target, a capacity target, an energy saving target, a voice target, a service target, and a quality of experience target.

The intent feedback type information includes at least one of the following information: intent fulfilment information, intent target measurement information, and intent conflict information.

In some implementations, the intent fulfilment information includes at least one of the following subtype information: intent fulfilment status information, intent non-fulfilment reason information, intent fulfilment degree information, and intent modification suggestion information; the intent target measurement information includes at least one of the following subtype information: a current measurement value of an intent target, a predicted value of the intent target, and a measurement value of a key performance indicator associated with the intent target; and the intent conflict information includes at least one of the following subtype information: conflict type information and conflict resolution suggestion information.

Optionally, before receiving the first information from the intent management device, the method further includes:
sending first request information to the intent management device, where the first request information is used to request to query or subscribe to information that is supported by the intent management device for evaluation and monitoring.

Optionally, before receiving the intent report from the intent requirement device, the method further includes:
sending third information to the intent management device, where the third information indicates the intent requirement device to subscribe to or query the intent report from the intent management device, and information that is evaluated and monitored in the intent report is specified by the second information.

According to a third aspect, this application provides an intent monitoring apparatus. The intent monitoring apparatus includes functional modules configured to implement any deployment method mentioned in the foregoing implementations. Optionally, each module may be implemented by using software and/or hardware.

According to a fourth aspect, this application provides an intent monitoring apparatus, including a processor. The processor is coupled to a memory, and may be configured to execute instructions in the memory, to implement the method according to any one of the first aspect or the possible implementations of the first aspect. Optionally, the apparatus further includes the memory. Optionally, the apparatus further includes a communication interface, and the processor is coupled to the communication interface.

According to a fifth aspect, this application provides an intent monitoring apparatus, including a processor. The processor is coupled to a memory, and may be configured to execute instructions in the memory, to implement the method according to any one of the second aspect or the possible implementations of the second aspect. Optionally, the apparatus further includes the memory. Optionally, the apparatus further includes a communication interface, and the processor is coupled to the communication interface.

According to a sixth aspect, this application provides a computer program product, including a computer program. When the computer program is executed by a processor, the method according to any one of the first aspect, the second aspect, or the possible implementations of the first aspect and the second aspect is implemented.

According to a seventh aspect, this application provides a computer-readable medium. The computer-readable medium stores program code for execution by a device, and the program code includes the method according to any one of the first aspect, the second aspect, or the possible implementations of the first aspect and the second aspect.

### BRIEF DESCRIPTION OF DRAWINGS

The accompanying drawings herein are incorporated into the specification and form a part of the specification, show embodiments in accordance with this application, and are used together with the specification to explain principles of this application.
FIG. 1 is a diagram of a system architecture to which an autonomous network is applied;
FIG. 2 is a diagram of intent-driven management;
FIG. 3 is a schematic flowchart of an intent monitoring method according to an embodiment of this application;
FIG. 4 is a schematic flowchart of an intent monitoring method according to an embodiment of this application;
FIG. 5 is a diagram of a structure of an intent monitoring apparatus according to an embodiment of this application;
FIG. 6 is a diagram of a structure of an intent monitoring apparatus according to another embodiment of this application; and
FIG. 7 is a diagram of a structure of an intent monitoring apparatus according to still another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application for a person skilled in the art with reference to particular embodiments.

### DESCRIPTION OF EMBODIMENTS

Example embodiments are described in detail herein, and examples of the example embodiments are presented in the accompanying drawings. When the following descriptions relate to the accompanying drawings, unless otherwise specified, same numbers in different accompanying drawings represent same or similar elements. Implementations described in the following example embodiments do not represent all implementations consistent with this application. On the contrary, the implementations are merely examples of apparatuses and methods that are described in the appended claims in detail and that are consistent with some aspects of this application.

With introduction of intelligent technologies such as artificial intelligence, machine learning, and big data analysis, a telecom system can implement self-governance with little or no manual intervention, and operation and maintenance efficiency is improved. The telecom system includes a management system and a network. In an autonomous network, a user conveys an intent of the user, and the intent focuses on describing an expectation object, an expectation target, and an expectation condition of the user. The network independently formulates an optimal solution that meets a user expectation and automatically executes a task. The process of converting the intent of the user into an automation solution is also referred to as an "intent-driven" process. An intent-driven technology is a core technology in the autonomous network.

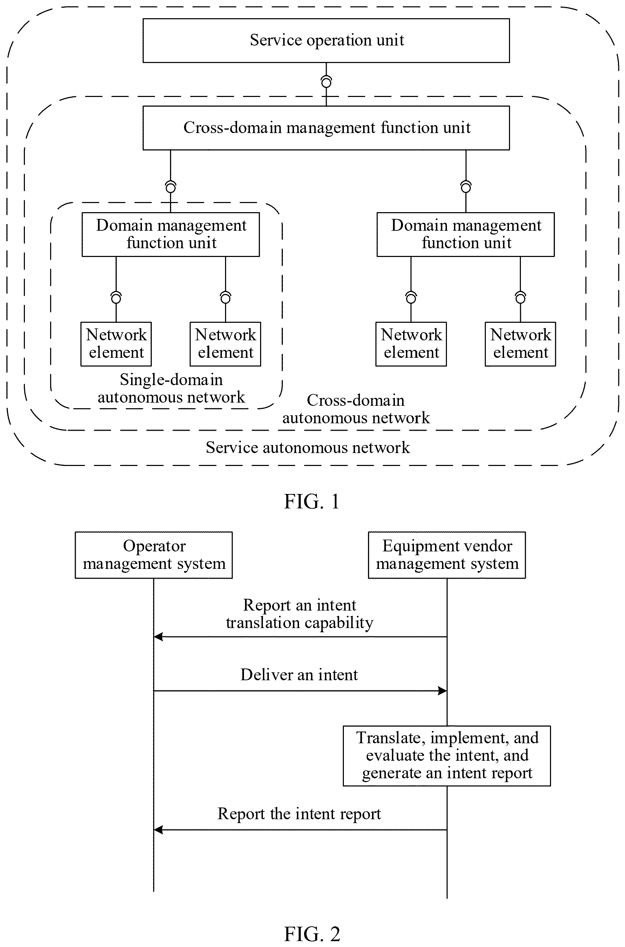

FIG. 1 is a diagram of a system architecture to which an autonomous network is applied. As shown in FIG. 1, autonomous networks may be classified into a service autonomous network, a cross-domain autonomous network, and a single-domain autonomous network based on management scopes of the autonomous networks.

The service autonomous network includes a network element, a domain management function unit, a cross-domain management function unit, and a service operation unit. The service operation unit may also be referred to as a communication service management function (communication service management function) unit, and can provide functions and management services such as charging, settlement, accounting, a customer service, business, network monitoring, communication service lifecycle management, and service intent translation. The service operation unit includes an operating system of an operator or an operating system of a vertical industry (vertical operational technology system).

The cross-domain autonomous network includes a network element, a domain management function unit, and a cross-domain management function unit. The cross-domain management function unit may also be referred to as a network management function (network management function, NMF) unit, and can provide functions or management services such as network lifecycle management, network deployment, network fault management, network performance management, network configuration management, network assurance, network optimization function, translation of an intent from a communication service provider (intent from communication service provider, intent-CSP) and an intent from a communication service consumer (intent from communication service consumer, intent-CSC). The network herein may include one or more network elements, subnetworks, or network slices. For example, the cross-domain management function unit may be a network slice management function (network slice management function, NSMF) unit, a management data analytical function (management data analytical function, MDAF) unit, a cross-domain self-organization network function (self-organization network function, SON-function) unit, or a cross-domain intent management function unit.

The single-domain autonomous network includes a network element and a domain management function unit. The domain management function unit may also be referred to as a subnetwork management function (subnetwork management function, NMF) unit or a network element management function (network element/function management function) unit, and can provide functions or management services such as lifecycle management of a subnetwork or a network element, deployment of the subnetwork or the network element, fault management of the subnetwork or the network element, performance management of the subnetwork or the network element, assurance of the subnetwork or the network element, optimization management of the subnetwork or the network element, and translation of an intent of the subnetwork or the network element. The subnetwork may include one of the following networks: a network in a technical domain, for example, a radio access network, a core network, or a transmission network; a network of a standard, for example, a global system for mobile communications (global system for mobile communications, GSM) network, a long term evolution (long term evolution, LTE) network, or a 5G network; a network provided by an equipment vendor; and a network in a geographical area, for example, a network of a factory A or a network of a city B. It should be noted that, when the subnetwork includes an access network, the functions or the management services provided for the subnetwork may alternatively be provided by the cross-domain management function unit.

Network elements are entities that provide a network service, and include a core network element, an access network element, and the like. The core network element may include but is not limited to an access and mobility management function entity, a session function entity, a policy control function entity, a network data analytics function entity, a network repository function entity, and a network management system. The access network element may include but is not limited to various types of base stations, for example, a next generation NodeB, an evolved NodeB, a central control unit, a central unit, a distributed unit, and a central unit user plane.

The system architecture to which the autonomous network is used is a service-oriented management architecture, and this architecture focuses on a management service producer (management service producer, MnS Producer) and a management service consumer (management service consumer, MnS Consumer).

It may be understood that, when a management service is a management service provided by the foregoing service operation unit, the service operation unit is a management service producer, and another service operator unit may be a management service consumer. When a management service is a management service provided by the foregoing cross-domain management function unit, the cross-domain management function unit is a management service producer, and the service operation unit is a management service consumer. When a management service is a management service provided by the foregoing domain management function unit, the domain management function unit is a management service producer, and the cross-domain management function unit or the service operation unit is a management service consumer. When a management service is a management service provided by the foregoing network element, the network element is a management service producer, and the domain management function unit, the cross-domain management function unit, or the service operation unit is a management service consumer.

In the intent-driven technology, a device that uses a network or a service is an intent requirement device. The intent requirement device may propose an intent based on a requirement of the intent requirement device, to configure the network or the service used by the intent requirement device. The intent requirement device belongs to an operator management system. Based on the intent proposed by the intent requirement device, a device that manages the network or the service used by the intent requirement device is an intent management device, and the intent management device belongs to an equipment vendor management system. For the foregoing autonomous network, there are a plurality of deployment scenarios for the intent requirement device and the intent management device based on a scope of an intent. For example, for a single-domain intent, the intent management device is deployed in a domain management function or a network element, and the intent requirement device is deployed in a cross-domain management function unit. For a cross-domain intent, the intent management device is deployed in a cross-domain management function unit, and the intent requirement device is deployed in a service operation unit. It may be understood that both two types of devices may be deployed on one function unit, and different devices are used for intents of different scopes. In the service-oriented management architecture, the intent requirement device is a management service consumer, and the intent management device is a management service producer.

It should be noted that the foregoing devices may be functional modules, chip systems, or other devices. This is not specifically limited in embodiments of this application.

FIG. 2 is a diagram of intent-driven management. As shown in FIG. 2, an equipment vendor management system first reports intent translation capability information to an operator management system. The intent translation capability information indicates an expectation object and an expectation target that are supported by an intent processing function of the equipment vendor management system. The operator management system delivers an intent to the equipment vendor management system based on a network operation and maintenance requirement or a network requirement of the operator management system. The equipment vendor management system translates and implements a received intent, and evaluates the intent, to generate an intent report. Then, the equipment vendor management system reports the generated intent report to the operator management system.

However, the intent report is determined by an intent evaluation capability in an intent processing function installed in the equipment vendor management system. The equipment vendor management system may have a plurality of intent processing functions. Correspondingly, the equipment vendor management system has a plurality of intent evaluation capabilities, and generated intent reports are different. Because the operator management system cannot accurately learn of intent report information that can be generated by the equipment vendor management system, the operator management system cannot accurately subscribe to a corresponding intent report based on the intent report information. Intent fulfilment information, conflict information, or a current performance measurement value of an intent expectation target that are fed back in a reported intent report may not accurately reflect an execution status of the intent of the operator management system. In this case, it is difficult for a communication network to perform, based on the intent report and a current network status, appropriate optimization and adjustment on an execution policy obtained through intent translation. This is not conducive to network autonomy and finally causes a decrease in network operation and maintenance efficiency.

In addition, the equipment vendor management system implements evaluation on the intent through simulation. If a specific evaluation requirement is not specified by the operator management system, the equipment vendor management system performs simulation calculation on all evaluation content within a scope of the intent evaluation capability of the equipment vendor management system. The simulation consumes a large quantity of computing resources and a large amount of time, and finally affects real-time performance of obtaining the intent report by the operator management system.

To resolve the foregoing problem, this application provides an intent monitoring method and monitoring apparatus, to accurately obtain, in real time, an intent report required by an operator management system, and ensure operation and maintenance efficiency of an autonomous network.

A technical concept of this application is as follows: An equipment vendor management system introduces information about an intent evaluation and monitoring capability into capability information that is of an intent processing function and that is reported to the operator management system. The operator management system determines, based on the foregoing capability information and based on an operation and maintenance requirement, an evaluation requirement and a monitoring requirement in an intent delivered to the equipment vendor management system, and subscribes to corresponding content of an intent report, to enable the intent report to accurately feed back an intent execution status.

In embodiments of this application, a single-domain intent is used as an example of an intent for description.

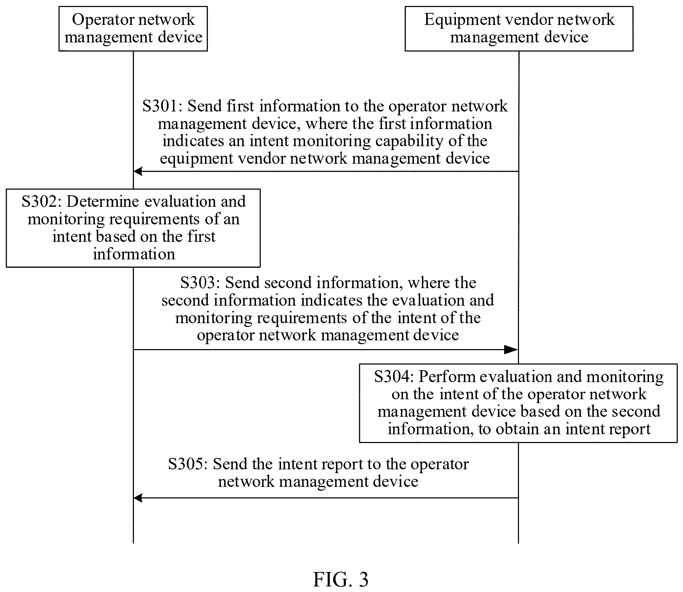

FIG. 3 is a schematic flowchart of an intent monitoring method according to an embodiment of this application. As shown in FIG. 3, the intent monitoring method provided in this embodiment of this application is applied to a single-domain intent. In the case of the single-domain intent, an operator network management device serves as an intent requirement device, and an equipment vendor network management device serves as an intent management device. The method includes the following steps.

S301: The equipment vendor network management device sends first information to the operator network management device, where the first information indicates an intent monitoring capability of the equipment vendor network management device.

The intent monitoring capability of the equipment vendor network management device is a capability of the equipment vendor network management device to evaluate and monitor an intent. A plurality of intent processing functions may be installed in the equipment vendor network management device, and each intent processing function may process intents in different geographic areas or of different types. For example, an intent processing function 1 processes an intent in a range of a geographic area 1, and an intent processing function 2 processes an intent in a range of a geographic area 2; or an intent processing function 3 processes a wireless networktype intent, and an intent processing function 4 processes a wireless service-type intent. Therefore, the operator network management device determines, by using the first information, an evaluation and monitoring capability supported by a specific intent processing function in the equipment vendor network management device.

The first information includes at least one of the following information: intent type information, intent object type information, intent target type information, intent feedback type information, and periodicity information.

The intent type information indicates a type of an intent that is supported by the equipment vendor network management device for evaluation and monitoring, and in some implementations, specifically includes: a business intent, to be specific, an intent from a communication service user; a service intent, to be specific, an intent from a communication service provider; and a network intent, to be specific, an intent from a network operator (intent from network operator).

The intent object type information indicates a type of an intent object that is supported by the equipment vendor network management device for evaluation and monitoring, and in some implementations, includes: a wireless network (Radio Network), where the wireless network may be further classified into a 5G wireless network, a 4G wireless network, a 3G wireless network, or the like; a wireless service (radio service), where the wireless service may be further classified into a 5G wireless service, a 4G wireless service, a 3G wireless service, or the like; a core network (core network), where the core network may be further classified into a 5GC network, an evolved packet core (evolved packet core, EPC) network, or the like; and a core network service (core service), where the core network service may be further classified into a 5GC service, an EPC service, or the like.

The intent target type information indicates a type of an intent target that is supported by the equipment vendor network management device for evaluation and monitoring, and in some implementations, includes: a coverage target (coverage target), which may be specifically a weak reference signal received power (Reference signal received power, RSRP) ratio target (WeakRSRPRatioTarget), and a low signal to interference plus noise ratio (signal to interference plus noise ratio, SINR) ratio target (LowSINRRatioTarget); a throughput target (RAN UE throughput target), which may be specifically an average throughput target (aveULRANUEThptTarget), and a low-throughput user ratio target (lowULRANUEThptRatioTarget); a capacity target (capacity target), for example, a high load ratio target (highUlPrbLoadRatioTarget); an energy saving target (energy saving target), for example, an energy efficiency target (RanEnergyEfficiencyTarget) and an energy consumption target (RanEnergyConsumptionTarget); a voice target (voice target), for example, a call drop rate target and a connection success rate target; a service target (SLS target), for example, a latency target (LatencyTarget), a user quantity target (UENumberTarget), and a user throughput target (UEThroughputTarget); and a quality of experience target (QoE target).

The intent feedback type information indicates a type of intent feedback that is supported by the equipment vendor network management device for evaluation and monitoring, and in some implementations, includes: intent fulfilment information (IntentFulfilmentInfo), intent target measurement information (IntentTargetPerfInfo), and intent conflict information (IntentConflictInfo).

The periodicity information indicates a specific periodicity that is supported by the equipment vendor network management device for evaluation and monitoring. For example, if the periodicity is 1 minute or 1 hour, it indicates that the equipment vendor network management device supports continuous evaluation and monitoring of the intent based on the periodicity.

Optionally, if the equipment vendor network management device supports evaluation and monitoring of the intent fulfilment information, the intent feedback type information may further indicate subtype information of the intent fulfilment information that is supported by the equipment vendor network management device for evaluation and monitoring, and the subtype information includes:
an intent fulfilment status, which may be fulfilled, not fulfilled, partially fulfilled, or the like;
an intent non-fulfilment reason, for example, insufficient resources, excessive users, or a target conflict.
an intent fulfilment degree, which may be represented in a form of a percentage, where for example, the fulfilment degree is 80%; and
intent modification suggestion information, where modification suggestion information of an intent target can be provided when the intent fulfilment status is not fulfilled.

Optionally, if the equipment vendor network management device supports evaluation and monitoring of the intent target measurement information, the intent feedback type information may further indicate subtype information of the intent target measurement information that is supported by the equipment vendor network management device for evaluation and monitoring, and the subtype information includes:
a current measurement value of an intent target, where the intent target is information about an expectation target in a corresponding intent instance;
a predicted value of the intent target, where the predicted value is a future predicted value of the expectation target in the intent instance, where for example, for a wireless throughput optimization intent, the predicted value of the intent target may be predicted values of future measurement values of an uplink/downlink average throughput target and a low-throughput user ratio target; and
a measurement value of a key performance indicator (key performance indicator, KPI) associated with the intent target, where for example, for the wireless throughput optimization intent, KPI values associated with the uplink/downlink average throughput target and the low-throughput user ratio target are a DL/UL RAN UE throughput for an NRCellDU or a DL/UL RAN UE throughput for a subnetwork; and for a wireless coverage optimization intent, a KPI value associated with a weak coverage ratio target is SS-RSRP distribution per SSB. It should be noted that the KPI value in this application is a concept of a generalized network performance indicator, and may include network performance measurement, minimization drive test (minimization drive test, MDT) data, trace data, and the like.

Optionally, if the equipment vendor network management device supports evaluation and monitoring of the intent conflict information, the intent feedback type information may further indicate subtype information of the intent conflict information that is supported by the equipment vendor network management device for evaluation and monitoring, and the subtype information includes:
a conflict type, which may be specifically an intent-level conflict (a conflict between two intent instances), an expectation-level conflict (a conflict between two expectation objects in a same intent instance), and a target-level conflict (a conflict between two targets of a same expectation object); and
a conflict resolution suggestion, to be specific, a suggestion for resolving an intent conflict when there is the intent conflict.

The first information may directly include the foregoing pieces of information. In some implementations, each piece of information has a corresponding identifier. The first information may alternatively carry corresponding identifiers of the foregoing pieces of information, to indirectly determine the evaluation and monitoring capability that is specifically supported by the equipment vendor network management device.

In some implementations, before the equipment vendor network management device sends the first information to the operator network management device, the equipment vendor network management device may further establish a management object of the intent processing function, and configure, in the management object, information that is about the intent evaluation and monitoring capability and that is of the management object. Configuration content may be recorded based on a structure shown in Table 1.

**Table 1**

| Attribute | isReadable | is Writable |
|---|---|---|
| Object identifier of an intent processing function (IntentHandlingFunctionld) | True | False |
| Information identifier of an intent evaluation and monitoring capability (IntentEvaluationCapabilityId) | True | False |
| Intent object type supported for evaluation and monitoring (SupportedEvaluationObject) | True | False |
| Intent target type supported for evaluation and monitoring (SupportedEvaluationTarget) | True | False |
| Intent feedback type supported for evaluation and monitoring (SupportedEvaluationType) | True | False |
| Subtype of intent fulfilment information supported for evaluation and monitoring (SupportedFulfilmentInfoType) | True | False |
| Subtype of intent target measurement information supported for evaluation and monitoring (SupprtedTargetPerfInfoType) | True | False |
| Subtype of intent target conflict information supported for evaluation and monitoring (SupportedConflictInfoType) | True | False |
| Periodicity information supported for evaluation and monitoring (SupportedEvaluationPeriodReq) | True | False |

Because a plurality of intent processing functions may be installed in the equipment vendor network management device, in management objects of the intent processing functions, different intent processing functions need to be distinguished from each other by using object identifiers of the intent processing functions. It should be noted that, when creating the management object of the intent processing function, the equipment vendor network management device has sent an object identifier corresponding to the management object to the operator network management device.

In addition, one intent processing function may have a plurality of intent evaluation and monitoring capabilities. Different intent evaluation and monitoring capabilities support different information for evaluation and monitoring. Information identifier of the intent evaluation and monitoring capabilities are used to distinguish between different intent evaluation and monitoring capabilities.

In an intent-driven technology, an intent requirement device and an intent management device exchange information through a logical interface, and the logical interface is a management and control interface of an intent-based autonomy management function. In interface model information, isReadable=True represents that an interface invoker can read the parameter, isReadable=False represents that the interface invoker cannot read the parameter, isWritable=True represents that the interface invoker can specify a value of the parameter, and isWritable=False represents that the interface invoker cannot specify the value of the parameter. It is considered that the information about the intent evaluation and monitoring capability supported by the equipment vendor network management device is determined, when configuring the management object of the intent processing function, as shown in Table 1, the equipment vendor network management device sets attributes as isReadable=True and isWritable=False, so that the interface invoker can only read each attribute that is used as the first information, but cannot configure the information about the intent evaluation and monitoring capability of the equipment vendor network management device.

In some implementations, when the first information carries an identifier of a management object of the intent processing function, the operator network management device can accurately locate a corresponding management object in the equipment vendor network management device by using the identifier of the management object of the intent processing function, so that interface model information carried in the management object can be read through the logical interface, to obtain the information about the intent evaluation and monitoring capability of the equipment vendor network management device.

Optionally, because the operator network management device has obtained the identifier of the management object that is of intent processing function and that is created by the equipment vendor network management device, before the equipment vendor network management device sends the first information to the operator network management device, the operator network management device may further send first request information to the equipment vendor network management device. In an example, the first request information is a request for querying or subscribing to the information that is about the intent evaluation and monitoring capability and that is of the intent processing function, and the request carries the identifier of the management object of the intent processing function.

S302: The operator network management device determines an evaluation requirement and a monitoring requirement that are of an intent based on the first information.

In this step, the operator network management device determines the evaluation requirement and the monitoring requirement in an intent-driven network based on an operation and maintenance requirement of an autonomous network and the intent evaluation and monitoring capability that is of the equipment vendor network management device and that is indicated in the first information. Content of the requirements is within a scope of the capability indicated in the first information.

S303: The operator network management device sends second information to the equipment vendor network management device, where the second information indicates the evaluation and monitoring requirements of the intent of the operator network management device.

In this step, the second information indicates the evaluation and monitoring requirements of the intent of the operator network management device. The evaluation and monitoring requirements may be included in an intent instance indicated in the second information, or may be independently indicated in the second information. In an example, the second information is an intent management request, and the intent management request carries an intent instance identifier, an intent expectation object, intent expectation target information, and the evaluation requirement and the monitoring requirement of the intent. For example, a specific intent of the operator network management device is a wireless network throughput optimization intent, an expectation object of the intent is an area 1, an expectation target is an uplink/downlink average throughput target and a low-throughput user ratio target, and a requirement is to perform evaluation and monitoring on a KPI value, namely, a DL/UL RAN UE throughput for a subnetwork, associated with the foregoing target.

It may be understood that, if an intent instance of the identifier does not exist in the equipment vendor network management device, the intent management request is an intent object creation request. If the intent instance of the identifier exists in the equipment vendor network management device, the intent management request is an intent object modification request.

Optionally, for the intent of the operator network management device, an intent management object may be created, and information configuration in the management object is shown in Table 2.

**Table 2**

| Attribute | isReadable | is Writable |
|---|---|---|
| Intent instance identifier (IntentId) | True | True |
| Expectation object (ExpectationObject) | True | True |
| Expectation target (ExpectationTarget) | True | True |
| Intent feedback type requirement for evaluation and monitoring (IntentEvaluationTypeReqContext) | True | True |
| Periodicity requirement for evaluation and monitoring (IntentEvaluationPeriodReq) | True | True |
| Requirement for a subtype of intent fulfilment information (FulfilmentInfoTypeReq) | True | True |

| Attribute | isReadable | isWritable |
|---|---|---|
| Requirement for a subtype of intent target measurement information (TargetPerfInfoTypeReq) | True | True |
| Requirement for a subtype of intent target conflict information (ConflictInfo TypeReq) | True | True |

In some implementations, when the second information carries an identifier of an intent management object, the equipment vendor network management device can accurately locate the intent management object by using the identifier of the intent management object, so that interface model information carried in the management object can be read through the logical interface, to obtain the intent of the operator network management device and the evaluation requirement and the monitoring requirement of the intent. Optionally, the equipment vendor network management device may further configure received intent evaluation and monitoring requirements in an intent management object instance.

S304: The equipment vendor network management device performs evaluation and monitoring on the intent of the operator network management device based on the second information, to obtain an intent report.

Before the equipment vendor network management device performs evaluation and monitoring on the intent of the operator network management device based on the second information, the equipment vendor network management device needs to translate the intent of the operator network management device, generate specific configuration parameters or measurement information of a network and a service, and execute the configuration parameters of the network and the service. For example, when the intent is the wireless throughput optimization intent, the equipment vendor network management device converts the wireless throughput intent to a control parameter of a self-organizing network (self-organizing network, SON) function like mobility load balancing (mobility load balancing, MLB) and coverage and capacity optimization (coverage and capacity optimization, CCO), and a radio resource management (radio resource management, RRM) configuration parameter in an area, and correspondingly configures the control parameter of the SON function and the RRM configuration parameter.

The equipment vendor network management device performs evaluation and monitoring on the intent of the operator network management device based on the second information, and content generated through evaluation and monitoring forms intent report information. Optionally, when the second information indicates the periodicity requirement for evaluation and monitoring, the equipment vendor network management device triggers evaluation and monitoring of the intent based on a periodicity of the equipment vendor network management device. For example, if the periodicity requirement for evaluation and monitoring indicates that a periodicity is 1 hour, the equipment vendor network management device performs evaluation and monitoring on the intent of the operator network management device every hour.

It should be noted that, when the second information indicates to perform evaluation and monitoring on the intent fulfilment information, if the second information specifically indicates the subtype information of the intent fulfilment information that needs to be evaluated and monitored, the equipment vendor network management device performs evaluation and monitoring on the indicated subtype information of the intent fulfilment type, and generates corresponding intent fulfilment information. For example, if the second information indicates that a fulfilment status of an intent instance needs to be evaluated and monitored, the equipment vendor network management device performs evaluation and monitoring on a corresponding intent fulfilment status based on the second information, and generates intent fulfilment status information.

If the second information does not specifically indicate the subtype information of the intent fulfilment information that needs to be evaluated and monitored, the equipment vendor network management device performs evaluation and monitoring on all the subtype information of the intent fulfilment information that is supported by the equipment vendor network management device, and generates corresponding intent fulfilment information.

Similarly, when the second information indicates to evaluate and monitor the intent target measurement information or the intent conflict information, only when the second information specifically indicates corresponding subtype information of the intent feedback type information, the equipment vendor network management device performs targeted evaluation and monitoring. If the second information does not specifically indicate corresponding subtype information of the intent feedback type information, the equipment vendor network management device performs evaluation and monitoring on all the subtype information supported by the equipment vendor network management device.

In some implementations, the equipment vendor network management device may create an intent report management object based on the second information, and update intent report information in the intent report management object based on the periodicity that is for evaluation and monitoring and that is indicated in the second information. Configuration of the intent report information in the intent report management object is shown in Table 3.

**Table 3**

| Attribute | isReadable | is Writable |
|---|---|---|
| Intent report identifier (IntentReportId) | True | False |
| Intent instance identifier (IntentId) | True | False |
| Intent fulfilment information (IntentFulfilmentInfo) | True | False |
| Intent target measurement information (IntentTargetPerfValueInfo) | True | False |
| Intent conflict information (IntentConflictInfo) | True | False |

S305: The equipment vendor network management device sends the intent report to the operator network management device.

In this step, the intent report sent by the equipment vendor network management device to the operator network management device includes the intent report identifier and intent report content information.

It may be understood that, if the equipment vendor network management device performs evaluation and monitoring based on the periodicity that is for evaluation and monitoring and that is indicated in the second information, the equipment vendor network management device periodically updates the intent report, and periodically sends the intent to the operator network management device. Otherwise, only when an attribute value in the intent report management object changes, the equipment vendor network management device sends attribute value change information of the intent report management object to the operator network management device, where the change information carries the intent report identifier and the intent report content information.

In some implementations, before the equipment vendor network management device sends the intent report to the operator network management device, the operator network management device may further send third information to the equipment vendor network management device. The third information indicates the operator network management device to subscribe to or query an intent report from the equipment vendor network management device. Specific information that is evaluated and monitored in the intent report is specified by the second information.

In an example, the third information may indicate the operator network management device to query the attribute value of the intent report management object from the equipment vendor network management device or subscribe to an attribute value change notification of the intent report management object.

The third information indicates to subscribe to or query a specific intent report, so that the equipment vendor network management device can be prevented from performing simulation on other information supported for evaluation and monitoring, to reduce a waste of computing resources and effectively improve real-time performance of obtaining the intent report by the intent requirement device.

In this embodiment, the operator network management device may determine, based on the information that is about the intent evaluation and monitoring capability and that is reported by the equipment vendor network management device, intent report information that can be generated by the equipment vendor network management device, to determine an evaluation requirement and a monitoring requirement from a delivered intent, and obtain an accurate intent report. In addition, an equipment vendor network management system can perform targeted simulation based on the accurate evaluation requirement and monitoring requirement, to reduce computing resource consumption in a simulation process and ensure the real-time performance of obtaining the intent report by the operator network management device.

It may be understood that, when the intent evaluation and monitoring capability of the equipment vendor network management device does not change, if the operator network management device delivers a new intent, by using the foregoing embodiment as an example, only steps S302 to S305 need to be performed.

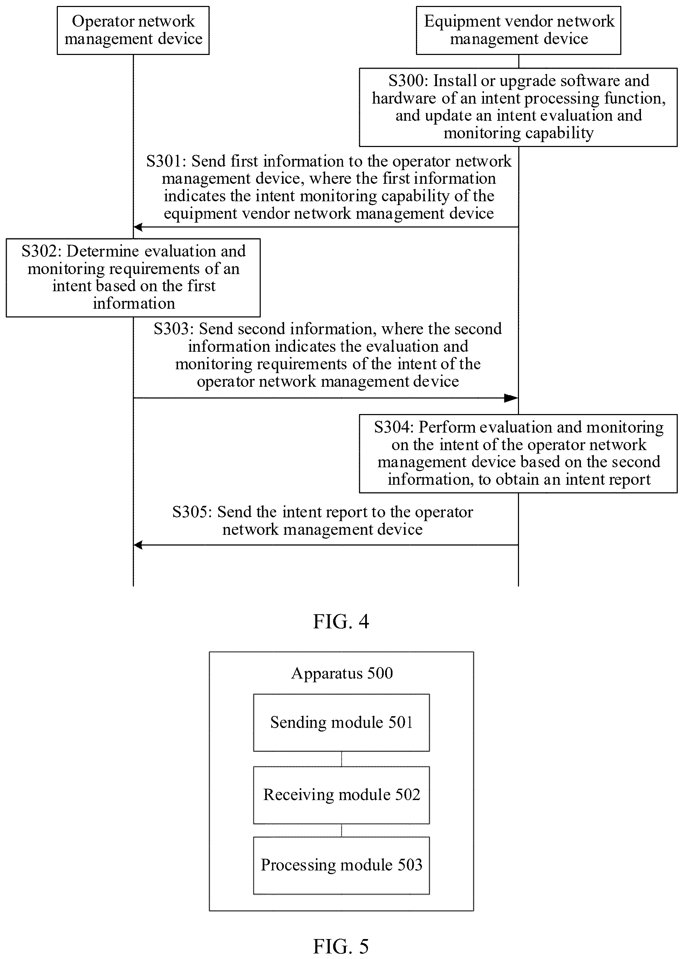

It should be noted that, as shown in S300 in FIG. 4, when software or hardware of the intent processing function is installed or upgraded in the equipment vendor network management device, the intent evaluation and monitoring capability of the equipment vendor network management device is updated accordingly, and then steps S301 to S305 are performed again, to implement the intent monitoring method in this application.

FIG. 5 is a diagram of a structure of an intent monitoring apparatus according to an embodiment of this application. As shown in FIG. 5, the apparatus 500 in this embodiment may include a sending module 501, a receiving module 502, and a processing module 503. The apparatus 500 may be configured to implement an operation implemented by an equipment vendor network management device, that is, an intent management device, in the method shown in FIG. 3 or FIG. 4.

For example, the sending module 501 may be configured to send first information to an intent requirement device, where the first information indicates an intent monitoring capability of the intent management device, and the first information includes at least one of the following information: intent type information, intent object type information, intent target type information, intent feedback type information, and periodicity information.

The sending module 501 is further configured to send an intent report to the intent requirement device.

The receiving module 502 may be configured to receive second information from the intent requirement device, where the second information indicates evaluation and monitoring requirements of an intent of the intent requirement device.

The processing module 503 may be configured to perform evaluation and monitoring on the intent of the intent requirement device based on the second information, to obtain an intent report.

Optionally, the receiving module 502 may be further configured to receive first request information from the intent requirement device, where the first request information is used to request to query or subscribe to information that is supported by the intent management device for evaluation and monitoring.

Optionally, the receiving module 502 may be further configured to receive third information from the intent requirement device, where the third information indicates the intent requirement device to subscribe to or query the intent report from the intent management device, and information that is evaluated and monitored in the intent report is specified by the second information.

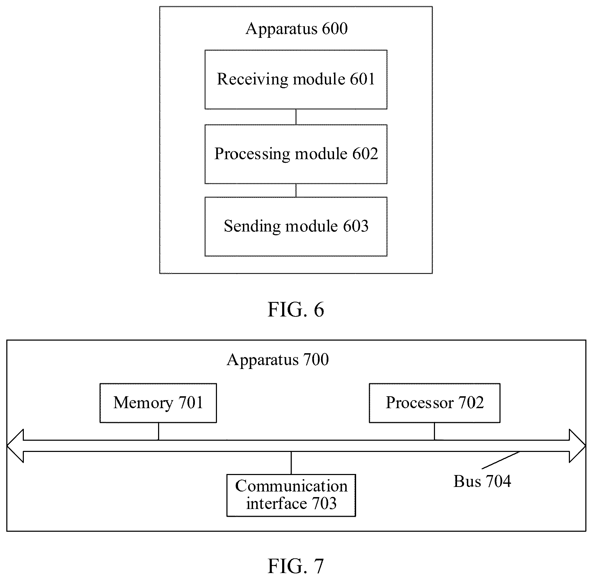

FIG. 6 is a diagram of a structure of an intent monitoring apparatus according to another embodiment of this application. As shown in FIG. 6, the apparatus 600 in this embodiment may include a receiving module 601, a processing module 602, and a sending module 603. The apparatus 600 may be configured to implement an operation implemented by an operator network management device, that is, an intent requirement device, in the method shown in FIG. 3 or FIG. 4.

For example, the receiving module 601 may be configured to receive first information from an intent management device, where the first information indicates an intent monitoring capability of the intent management device, and the first information includes at least one of the following information: intent type information, intent object type information, intent target type information, intent feedback type information, and periodicity information.

The processing module 602 may be configured to determine evaluation and monitoring requirements of an intent of the intent requirement device based on the first information.

The sending module 603 may be configured to send second information to the intent management device, where the second information indicates the intent of the intent requirement device, and the intent of the intent requirement device includes the evaluation requirement and the monitoring requirement.

Optionally, the sending module 603 may be further configured to send first request information to the intent management device, where the first request information is used to request to query or subscribe to information that is supported by the intent management device for evaluation and monitoring.

Optionally, the sending module 603 may be further configured to send third information to the intent management device, where the third information indicates the intent requirement device to subscribe to or query an intent report from the intent management device, and information that is evaluated and monitored in the intent report is specified by the second information.

It should be understood that the apparatus 500 and the apparatus 600 are implemented in a form of functional modules. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The foregoing apparatus 500 and apparatus 600 have functions of implementing corresponding procedures and/or steps in the foregoing method embodiments. The foregoing functions may be implemented by hardware, or may be implemented by hardware executing corresponding software. The hardware or the software includes one or more modules corresponding to the function.

FIG. 7 is a diagram of a structure of an intent monitoring apparatus according to still another embodiment of this application. The apparatus 700 shown in FIG. 7 may be configured to perform the method performed by the intent monitoring apparatus in any one of the foregoing methods.

As shown in FIG. 7, the apparatus 700 in this embodiment includes a memory 701, a processor 702, a communication interface 703, and a bus 704. The memory 701, the processor 702, and the communication interface 703 implement mutual communication connections through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform any one of the foregoing methods.

The processor 702 may be a general-purpose central processing unit (central processing unit, CPU), a microprocessor, an application-specific integrated circuit, or one or more integrated circuits, and is configured to execute a related program.

The processor 702 may alternatively be an integrated circuit chip, and has a signal processing capability. In an implementation process, the related steps in embodiments of this application may be completed by using a hardware integrated logic circuit or instructions in a form of software in the processor 702.

The processor 702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, functions that need to be performed by units included in the apparatus in this application.

The communication interface 703 may use, but not limited to, a transceiver apparatus of a transceiver type, to implement communication between the apparatus 700 and another device or apparatus.

The bus 704 may include a path for transferring information between the components (for example, the memory 701, the processor 702, and the communication interface 703) of the apparatus 700.

An embodiment of this application further provides a computer-readable storage medium. The computer-readable storage medium stores computer instructions. When a processor executes the computer instructions, the steps performed by a terminal device or a network device in the methods in the foregoing embodiments are implemented.

An embodiment of this application further provides a computer program product, including computer instructions. When the computer instructions are executed by a processor, the steps performed by a terminal device or a network device in the methods in the foregoing embodiments are implemented.

It should be noted that the modules or components shown in the foregoing embodiments may be one or more integrated circuits configured to implement the foregoing methods, for example, one or more application-specific integrated circuits, one or more microprocessors, or one or more field programmable gate arrays. For another example, when the foregoing module is implemented in a form in which a processing element invokes program code, the processing element may be a general-purpose processor, for example, a central processing unit or another processor that can invoke program code, for example, a controller. For another example, the modules may be integrated together and implemented in a form of a system-on-a-chip (system-on-a-chip, SoC).

All or some of the foregoing embodiments may be implemented by using software, hardware, firmware, a software module, or any combination thereof. When software is used to implement embodiments, all or a part of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state disk Solid State Disk (SSD)), or the like.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and embodiments are merely considered as examples, and the actual scope and spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. An intent monitoring method, applied to an intent management device, wherein the method comprises:
sending first information to an intent requirement device, wherein the first information indicates an intent monitoring capability of the intent management device, and the first information comprises at least one of the following information: intent type information, intent object type information, intent target type information, intent feedback type information, and periodicity information;
receiving second information from the intent requirement device, wherein the second information indicates evaluation and monitoring requirements of an intent of the intent requirement device;
performing evaluation and monitoring on the intent of the intent requirement device based on the second information to obtain an intent report; and
sending the intent report to the intent requirement device.

2. The method according to claim 1, wherein the intent type information comprises at least one of the following information: a business intent, a service intent, and a network intent.

3. The method according to claim 1, wherein the intent object type information comprises at least one of the following information: a wireless network, a wireless service, a core network, and a core network service.

4. The method according to claim 1, wherein the intent target type information comprises at least one of the following information: a coverage target, a throughput target, a capacity target, an energy saving target, a voice target, a service target, and a quality of experience target.

5. The method according to claim 1, wherein the intent feedback type information comprises at least one of the following information: intent fulfilment information, intent target measurement information, and intent conflict information.

6. The method according to claim 5, wherein the intent fulfilment information comprises at least one of the following subtype information: intent fulfilment status information, intent non-fulfilment reason information, intent fulfilment degree information, and intent modification suggestion information;
the intent target measurement information comprises at least one of the following subtype information: a current measurement value of an intent target, a predicted value of the intent target, and a measurement value of a key performance indicator associated with the intent target; and
the intent conflict information comprises at least one of the following subtype information: conflict type information and conflict resolution suggestion information.

7. The method according to any one of claims 1 to 6, wherein before sending the first information to the intent requirement device, the method further comprises:
receiving first request information from the intent requirement device, wherein the first request information is used to request to query or subscribe to information that is supported by the intent management device for evaluation and monitoring.

8. The method according to any one of claims 1 to 7, wherein before sending the intent report to the intent requirement device, the method further comprises:
receiving third information from the intent requirement device, wherein the third information indicates the intent requirement device to subscribe to or query the intent report from the intent management device, and information that is evaluated and monitored in the intent report is specified by the second information.

9. An intent monitoring method, applied to an intent requirement device, wherein the method comprises:
receiving first information from an intent management device, wherein the first information indicates an intent monitoring capability of the intent management device, and the first information comprises at least one of the following information: intent type information, intent object type information, intent target type information, intent feedback type information, and periodicity information;
determining evaluation and monitoring requirements of an intent of the intent requirement device based on the first information;
sending second information to the intent management device, wherein the second information indicates the evaluation and monitoring requirements of the intent of the intent requirement device; and
receiving an intent report from the intent management device.

10. The method according to claim 9, wherein the intent type information comprises at least one of the following information: a business intent, a service intent, and a network intent.

11. The method according to claim 9, wherein the intent object type information comprises at least one of the following information: a wireless network, a wireless service, a core network, and a core network service.

12. The method according to claim 9, wherein the intent target type information comprises at least one of the following information: a coverage target, a throughput target, a capacity target, an energy saving target, a voice target, a service target, and a quality of experience target.

13. The method according to claim 9, wherein the intent feedback type information comprises at least one of the following information: intent fulfilment information, intent target measurement information, and intent conflict information.

14. The method according to claim 13, wherein the intent fulfilment information comprises at least one of the following subtype information: intent fulfilment status information, intent non-fulfilment reason information, intent fulfilment degree information, and intent modification suggestion information;
the intent target measurement information comprises at least one of the following subtype information: a current measurement value of an intent target, a predicted value of the intent target, and a measurement value of a key performance indicator associated with the intent target; and
the intent conflict information comprises at least one of the following subtype information: conflict type information and conflict resolution suggestion information.

15. The method according to any one of claims 9 to 14, wherein before receiving the first information from the intent management device, the method further comprises:
sending first request information to the intent management device, wherein the first request information is used to request to query or subscribe to information that is supported by the intent management device for evaluation and monitoring.

16. The method according to any one of claims 9 to 14, wherein before receiving the intent report from the intent management device, the method further comprises:
sending third information to the intent management device, wherein the third information indicates the intent requirement device to subscribe to or query the intent report from the intent management device, and information that is evaluated and monitored in the intent report is specified by the second information.

17. An intent monitoring apparatus, wherein the intent monitoring apparatus comprises a functional module configured to implement the intent monitoring method according to any one of claims 1 to 8, or comprises a functional module configured to implement the intent monitoring method according to any one of claims 9 to 16.

18. An intent monitoring apparatus, comprising a processor and a memory, wherein
the memory stores computer-executable instructions; and
the processor executes the computer-executable instruction stored in the memory, to enable the intent monitoring apparatus to perform the intent monitoring method according to any one of claims 1 to 8 or any one of claims 9 to 16.

19. A computer-readable storage medium, wherein the computer-readable storage medium stores computer-executable instructions, and when the computer-executable instructions are executed by a processor, the intent monitoring method according to any one of claims 1 to 8 or any one of claims 9 to 16 is implemented.

20. A computer program product, comprising a computer program, wherein when the computer program is performed by a processor, the intent monitoring method according to any one of claims 1 to 8 or any one of claims 9 to 16 is implemented.
